# EUROPEAN PATENT APPLICATION

(11) **EP 3 406 548 A1**
(43) Date of publication of application: **28.11.2018**
(21) Application number: 17173076.5
(22) Date of filing: 26.05.2017
(51) Int. Cl.: B65G 47/14

(54) **SYSTEM AND METHOD FOR SEPARATING AND FEEDING ONE PACKAGE OF MAGNETIC METERIALS TO A PACKING MACHINE**

(71) Applicant: Vestel Elektronik Sanayi ve Ticaret A.S., 45030 Manisa (TR)
(72) Inventor: KUYUCU, Ömer Gökce, 45030 Manisa (TR)
(74) Representative: Ascherl, Andreas

(57) **Abstract**

The invention describes a system (100), which includes a processor, a servo motor (112), a flexible rubber platform (116), the packaged magnetic materials (110), a piston (118), electromagnets (102, 106), a start sensor (120) and a stop sensor (122). The electromagnet (102) picks the packaged magnetic material (110A) from the flexible rubber platform (116). The flexible rubber platform (116) includes a high surface tension area and a low surface tension area. The piston (118) is coupled below the high surface tension area and adapted to lift the packaged magnetic material (110B) near to the magnetic field of the electromagnet (1029. The start sensor (120) provides a start signal to the processor when the piston (118) lifts the packaged magnetic material (110B) from the high surface tension area to energize the electromagnet (102). The stop sensor (122) provides a stop signal to the processor when the packaged magnetic material (110A) reaches the packaging machine (126) to de-energize the electromagnet (106) to drop the packaged magnetic material (110A) in the packaging machine (126).

## Description

This invention refers to a system to feed one package of magnetic materials to a packing machine, and, more particularly, a system and method to separate one package of magnetic materials from a plurality of packages of magnetic materials to another packaging machine or shrink packaging machine.

### Background of the invention

Conventionally, automatic conveyor systems are used in the shrink packaging of any materials. There are different types of parts/materials that are packaged together. The parts/materials can be user manual booklets, papers, spare parts or assembly screws for television and/or household items. For example, user manual booklets need to be packed with spare parts. The parts/materials to be packaged are transferred to a conveyor by an operator or some automatic feeding systems. In fully automatic systems, paper or book feeders are provided that are synchronized with a packaging machine signal. However, the automatic system does not provide a solution for feeding packaged materials/parts which are packed together in a plastic bag, in particular packed with PE (polypropylene) or PP (polyethylene) plastic bags, since the PE, PP bags with packaged materials/screws are not suitable to many automation pick up systems like vacuum or robotic grippers or others, since the shapes of packaged materials and for example screws in a plastic bag are not stable for sensors or camera systems and they get mixed up. Further, it is not easy to separate them even by an operator due to electrostatic behavior of PE plastic bags.

In the prior art, above stated problems have been addressed in various ways. US3448857 discloses a magnetic separator that utilizes a repulsion type principle for separating particles of greater conductivity from particles of less electrical conductivity. The separator is made up of a conveyor belt that moves at high velocity through the belt causing the particles of greater conductivity to be projected into a first repository and the particles of lesser conductivity to be projected into a second repository.

CN102897494 discloses a bolt conveying device for solving the automatic sorting of the bolts during the assembly process of the automobile and the application of the sealant in the threaded part.

GB1356486 discloses a transfer apparatus for transferring each of a succession of articles, or batches of articles, from a first location to a second location, that includes an article-engaging member, a first actuating system for performing a variable first stroke and a second actuating system for performing a variable second stroke independently of the first actuating system.

However, none of the prior art provides a solution for feeding packaged materials/parts which are packed together in a plastic bag to a further packing machine.

### Object of the invention

It is therefore the object of the present invention to provide an automated system for separating packaged magnetic materials, which are packaged together in a plastic bag, and feeding the plastic packaged materials to a further packing machine.

### Summary of the invention

The before mentioned object is solved by an automated system for separating and feeding a plurality of packaged magnetic materials in form of magnetic parts which are packed together inside a plastic bag to a further packing machine according to claim 1.

In view of the foregoing, an embodiment herein provides an automated system for feeding a plurality of packaged magnetic materials to a packing machine. The automated system includes a processor, a servo motor, a flexible rubber platform, the plurality of packaged magnetic materials, a piston, a plurality of electromagnetic carrier heads, a start sensor and a stop sensor. The plurality of electromagnetic carrier heads is configured to pick the plurality of packaged magnetic materials. The servo motor is coupled to a cross shaped frame. The servo motor is configured to rotate the cross shaped frame 90° horizontally in a clockwise or counter-clockwise direction. The flexible rubber platform is adapted to receive the plurality of packaged magnetic materials. The centre area of the flexible rubber platform is coated with a formulated paint and rest of the area of the flexible rubber platform coated with silicon paint. In one embodiment, the formulated paint coat that defines a high surface tension area. The high surface tension area is adapted to receive a packaged magnetic material from the plurality of packaged magnetic materials. The piston is coupled below the high surface tension area and is adapted to lift the packaged magnetic material near to the magnetic field of the plurality of electromagnetic carrier heads. The start sensor is configured to sense the packaged magnetic material when the piston lifts the packaged magnetic material from the flexible rubber platform and provide a start signal to the processor. The stop sensor is configured to provide a stop signal to the processor when the packaged magnetic material reaches the packaging machine. The processor de-energizes at least one of the pluralities of electromagnetic carrier heads to drop the packaged magnetic material in the packaging machine when the processor receives the stop signal.

In an embodiment, the plurality of packaged magnetic materials are screws packaged with polypropylene or polyethylene as plastic bag. The packaging machine is a shrink packaging machine. In an embodiment, the plurality of electromagnetic carrier heads further includes a first electromagnetic carrier head that is coupled to a first axis of the cross shaped frame, a second electromagnetic carrier head that is coupled to a second axis of the cross shaped frame, a third electromagnetic carrier head that is coupled to a third axis of the cross shaped frame, and a fourth electromagnetic carrier that is head coupled to a fourth axis of the cross shaped frame. In one embodiment, the processor configured to provide signals to (i) energize the first electromagnetic carrier head; (ii) de-energize the third electromagnetic carrier head, and (iii) rotate the cross shaped frame 90° horizontally in the clockwise or counter-clockwise direction simultaneously.

In an embodiment of the invention, the processor is configured to provide signals to (i) energize the second electromagnetic carrier head, (ii) de-energize the fourth electromagnetic carrier head, and (iii) rotate the cross shaped frame 90° horizontally in the clockwise counter-clockwise direction simultaneously. In an embodiment, the silicon painted area defines a low surface tension area that is adapted to hold the plurality of packaged materials when the piston lifts the packaged material from the high surface tension area. In an embodiment, the flexible rubber platform is adapted to shrink up and down during the movement of the piston

In another aspect, a method for one or more packaged magnetic materials to a packing machine is provided. The method includes steps of: (i) a first packaged magnetic material from a high surface tension area of a flexible rubber platform is lifted using a piston; (ii) the first packaged magnetic material is sensed by a start sensor when the first packaged magnetic material is lifted from the flexible rubber platform; (iii) a start signal is provided to a processor to energize a first electromagnetic carrier head using the start sensor; (iv) the first electromagnetic carrier head is energized to pick the first packaged magnetic material using the processor; (v) the first packaged magnetic material is picked using the first electromagnetic carrier head; (vi) a signal is provided to a servo motor to rotate the cross shaped frame using the processor; In one embodiment, the first electromagnetic carrier head coupled to a cross shaped frame; (vii) the cross shaped frame is rotated 90° horizontally in a clockwise or counter-clockwise direction using the servo motor; (viii) the first packaged magnetic material is sensed by a stop sensor when the first packaged magnetic material reaches the packaging machine; (ix) a stop signal is provided to the processor using the stop sensor to de-energize the first electromagnetic carrier head; and (x) the first electromagnetic carrier head is de-energized by the processor to drop the first packaged magnetic material in the packaging machine.

In one embodiment, the centre part of the flexible rubber platform is coated with a formulated paint and rest of the area of the flexible rubber platform is coated with silicon paint. In another embodiment, the formulated painted area defines the high surface tension area and silicone painted area defines a low surface tension area.

In another embodiment, the cross shaped frame is coupled with (i) the first electromagnetic carrier head, (ii) a second electromagnetic carrier head, (iii) a third electromagnetic carrier head, and (iv) a fourth electromagnetic carrier head. In another embodiment, each electromagnetic carrier head is adapted to pick at least one of the one or more packaged magnetic materials. In one embodiment, (i) the first electromagnetic carrier head is configured to pick the first packaged magnetic material, (ii) the second electromagnetic carrier head is configured to pick the second packaged magnetic material, (iii) the third electromagnetic carrier head is configured to pick the third packaged magnetic material, and (iv) the fourth electromagnetic carrier head is configured to pick the fourth packaged magnetic material. In an embodiment, the processor is configured to provide signals to (i) energize the first electromagnetic carrier head to pick the first packaged magnetic material from the flexible rubber platform, (ii) de-energize the third electromagnetic carrier head to drop the third packaged magnetic material in the packaging machine, and (iii) rotate the cross shaped frame 90° horizontally in the clockwise or counter-clockwise direction simultaneously. In another embodiment, the processor is configured to provide signals to (i) energize the second electromagnetic carrier head to pick the second packaged magnetic material from the flexible rubber platform, (ii) de-energize the fourth electromagnetic carrier head to drop the fourth packaged magnetic material in the packaging machine, and (iii) rotate the cross shaped frame 90° horizontally in the clockwise or counter-clockwise direction simultaneously. In one embodiment, the start sensor and the stop sensor are IR sensors or proximity sensors.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the spirit thereof, and the embodiments herein include all such modifications.

### BRIEF DESCRIPTION OF THE DRAWINGS

The embodiments herein will be better understood from the following detailed description with reference to the drawings, in which:
FIGS 1A and 1B illustrates a schematic view of a system for segregating mixed up one or more packaged magnetic materials in a flexible rubber platform and feeding the one or more packaged magnetic materials to a packing machine according to an embodiment of the invention;
FIG. 2 illustrates detailed view of the flexible rubber platform of FIGS. 1A-B; and
FIG. 3 is a flow diagram illustrating a method for one or more packaged magnetic materials to a packing machine according to an embodiment of the invention.

### DETAILED DESCRIPTION OF THE DRAWINGS

The embodiments of the invention and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced.

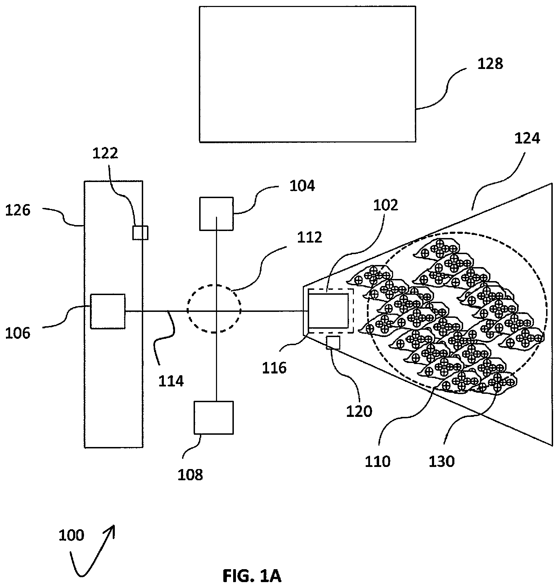

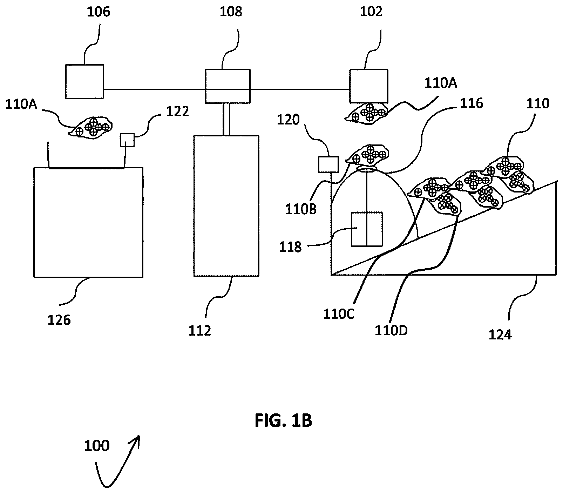

As mentioned, there remains a need for a system for segregating mixed up packaged magnetic materials such as screws in and feeding the packaged screws to another packing machine. The embodiments of the invention achieve this by providing an automated system for segregating one or more packaged magnetic materials in a flexible rubber platform and feeding the one or more packaged magnetic materials to a packing machine. Referring to FIGS. 1 through 3, where similar reference characters denote corresponding features consistently throughout the figures, there are shown preferred embodiments.

FIGS 1A and 1B illustrates a schematic view of a system 100 for separating one packaged magnetic material 110 in a plastic bag by means of a flexible rubber platform and feeding the one packaged magnetic material 110 to a packing machine 126. The system 100 includes a processor (not shown in FIGS 1A-B), one or more electromagnetic carrier heads, the one or more bags of packaged magnetic materials 110, a servo motor 112, a cross shaped frame 114, a flexible rubber platform 116, a piston 118, a start sensor 120, a stop sensor 122. In one embodiment, the one or more electromagnetic carrier heads are a first electromagnetic carrier head 102, a second electromagnetic carrier head 104, a third electromagnetic carrier head 106, and a fourth electromagnetic carrier head 108. The first electromagnetic carrier head 102, the second electromagnetic carrier head 104, the third electromagnetic carrier head 106, and the fourth electromagnetic carrier head 108 are configured to pick one bag of packaged magnetic material 110. The cross shaped frame 114 is coupled to a rotor of the servo motor 112. In one embodiment, (i) the first electromagnetic carrier head 102 is coupled to a first axis of the cross shaped frame 114, (ii) the second electromagnetic carrier head 104 is coupled to a second axis of the cross shaped frame 114, (iii) the third electromagnetic carrier head 106 is coupled to a third axis of the cross shaped frame 114, and (iv) the fourth electromagnetic carrier head 108 is coupled to a fourth axis of the cross shaped frame 114. In this embodiment, the bags of packaged magnetic material 110 are packaged screws 130.

The servo motor 112 is configured to rotate the cross shaped frame 114 at 90° horizontally in clockwise or counter-clockwise direction. The flexible rubber platform 116 is adapted to receive the one bag of packaged magnetic materials from a material pouring box 124. The centre area of the flexible rubber platform 116 is coated with a formulated paint and rest of the area of the flexible rubber platform 116 is coated with silicon paint. In this embodiment, the formulated paint defines a high surface friction or tension area. In another embodiment, the silicon paint coat defines a low surface friction or tension area. The high surface friction area is adapted to receive a packaged magnetic material from the plurality of packaged magnetic materials 110. The piston 118 is adapted to lift a first packaged magnetic material 110A near to the magnetic field of the first electromagnetic carrier head 102. In one embodiment, the piston 118 is coupled below the high surface tension area. The start sensor 120 is configured to sense the first packaged magnetic material 110A when the piston 118 lifts the first packaged magnetic material 110A from the flexible rubber platform 116 and provides a start signal to the processor. The processor energizes the first electromagnetic carrier head 102 to attract at the first packaged magnetic material 110A when the processor receives the start signal. The servo motor 112 rotates the cross shaped frame 114 90° horizontally in a clockwise or counter-clockwise direction. The stop sensor 122 is configured to provide a stop signal to the processor when the first packaged magnetic material 110A reaches the packaging machine 126. The processor de-energizes the first electromagnetic carrier head 102 to drop the first packaged magnetic material or metal 110A in the packaging machine 126 when the processor receives the stop signal.

In one embodiment, the flexible rubber platform 116 is adapted to shrink up and down during the movement of the piston 118. In another embodiment, the one or more packaged magnetic materials 110 are screws 130 packaged with polypropylene or polyethylene. In an embodiment, the packaging machine 126 is a shrink packaging machine. In one embodiment, the first electromagnetic carrier head 102 is configured to pick the first packaged magnetic material 110A from the one or more packaged magnetic material 110. In another embodiment, the second electromagnetic carrier head 104 is configured to pick a second packaged magnetic material from the one or more packaged magnetic material 110. In another embodiment, the third electromagnetic carrier head 106 is configured to pick a third packaged magnetic material from the one or more packaged magnetic material 110. In one embodiment, the fourth electromagnetic carrier head 108 is configured to pick a fourth packaged magnetic material from the one or more packaged magnetic material 110.

In one embodiment, the processor is configured to provide signals to (i) energize the first electromagnetic carrier head 102 to pick the first packaged magnetic material from the flexible rubber platform 116, (ii) de-energize the third electromagnetic carrier head 106 to drop the third packaged magnetic material in the packaging machine 126, and (iii) rotate the cross shaped frame 90° horizontally in a clockwise or counter-clockwise direction simultaneously. In another embodiment, the processor is configured to provide signals to (i) energize the second electromagnetic carrier head 104 to pick the second packaged magnetic material from the flexible rubber platform 116, (ii) de-energize the fourth electromagnetic carrier head 108 to drop the fourth packaged magnetic material in the packaging machine 126, and (iii) rotate the cross shaped frame 90° horizontally in the clockwise or counter-clockwise direction simultaneously. In one embodiment, the automation box 128 is adapted to pack the one or more packaged magnetic materials 110 for transportation from one place to another.

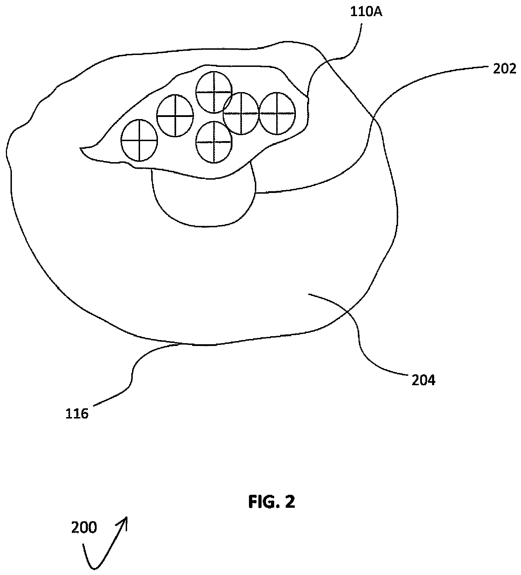

FIG. 2 illustrates exploded view 200 of the flexible rubber platform 116 of FIGS. 1A-B according to an embodiment herein. The flexible rubber platform 116 includes the high surface tension area 202, and the low surface tension area 204. The high surface tension area 202 is defined by coating the formulated paint. The low surface tension area 204 is defined by coating the silicon paint. In one embodiment, the low surface tension area 204 is adapted to hold the one or more packaged materials 110 when the piston lifts the first packaged material 110A from the high surface tension area 202. In one embodiment, the flexible rubber platform 116 is expandable.

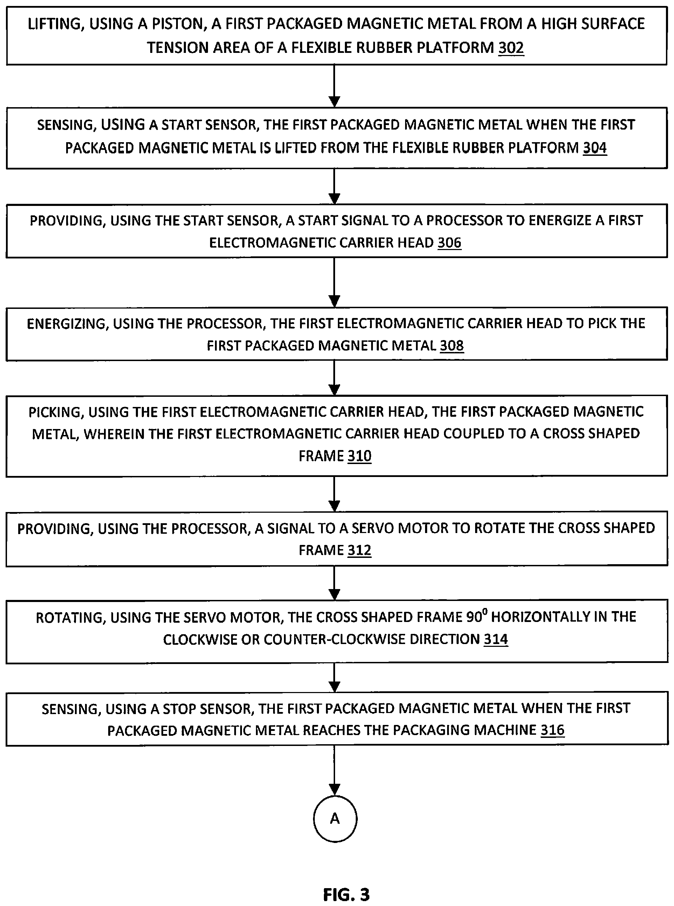

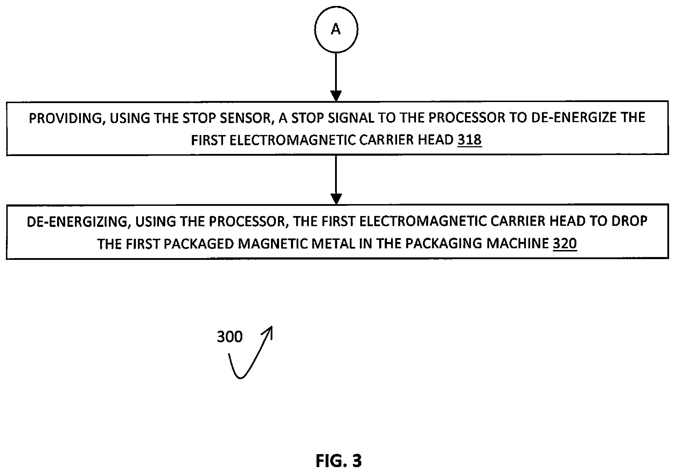

FIG. 3 is a flow diagram 300 illustrating a method for one or more packaged magnetic materials 110 to a packing machine 126 according to an embodiment herein. The method includes following steps. In step 302, a first packaged magnetic material 110A from a high surface tension area 202 of a flexible rubber platform 116 is lifted using a piston 118. In one embodiment, the centre part of the flexible rubber platform 116 is coated with a formulated paint and rest of the area of the flexible rubber platform 116 is coated with silicon paint. In another embodiment, the formulated painted area defines a high surface tension area 202 and silicon painted area defines a low surface tension area 204. In step 304, the first packaged magnetic material 110A is sensed by a start sensor 120, when the first packaged magnetic material 110A is lifted from the flexible rubber platform 116. In step 306, a start signal is provided to a processor to energize a first electromagnetic carrier head 102 using the start sensor 120. In step 308, the first electromagnetic carrier head 102 is energized to pick the first packaged magnetic material 110A using the processor.

In step 310, the first packaged magnetic material 110A is picked using the first electromagnetic carrier head 102. In one embodiment, the first electromagnetic carrier head 102 coupled to a cross shaped frame 114. In step 312, a signal is provided to a servo motor 112 using the processor to rotate the cross shaped frame 114. In step 314, the cross shaped frame 114 is rotated 90° horizontally in a clockwise or counter-clockwise direction using the servo motor 112. In step 316, the first packaged magnetic material 110A is sensed by a stop sensor 122 when the first packaged magnetic material 110A reaches the packaging machine 126. In step 318, a stop signal is provided to the processor using the stop sensor 122 to de-energize the first electromagnetic carrier head 102. In step 320, the first electromagnetic carrier head 102 is de-energized by the processor to drop the first packaged magnetic material 110A in the packaging machine 126. In one embodiment, the steps from 302 to 320 are repeated for (i) a second electromagnetic carrier head 104, (ii) a third electromagnetic carrier head 106, and (iii) a fourth electromagnetic carrier head 108 to pick a second packaged magnetic material 110B, a third packaged magnetic material 110C, and a fourth packaged magnetic material 110D respectively.

In one embodiment, the cross shaped frame 114 is coupled with (i) the first electromagnetic carrier head 102, (ii) the second electromagnetic carrier head 104, (iii) the third electromagnetic carrier head 106, and (iv) the fourth electromagnetic carrier head 108. In another embodiment, each electromagnetic carrier head is adapted to pick at least one of the one or more packaged magnetic materials 110. In one embodiment, (i) the first electromagnetic carrier head 102 is configured to pick the first packaged magnetic material 110A, (ii) the second electromagnetic carrier head 104 is configured to pick the second packaged magnetic material 110B, (iii) the third electromagnetic carrier head is configured to pick the third packaged magnetic material 110C, and (iv) the fourth electromagnetic carrier head is configured to pick thte fourth packaged magnetic material 110D. In an embodiment, the processor is configured to provide signals to (i) energize the first electromagnetic carrier head 102 to pick the first packaged magnetic material 110A from the flexible rubber platform 116, (ii) de-energize the third electromagnetic carrier head 106 to drop the third packaged magnetic material 110C in the packaging machine 126, and (iii) rotate the cross shaped frame 114 90° horizontally in the clockwise or counter-clockwise direction simultaneously. In another embodiment, the processor is configured to provide signals to (i) energize the second electromagnetic carrier head 104 to pick the second packaged magnetic material 110B from the flexible rubber platform 116, (ii) de-energize the fourth electromagnetic carrier head 108 to drop the fourth packaged magnetic material 110D in the packaging machine 126, and (iii) rotate the cross shaped frame 114 90° horizontally in the clockwise or counter-clockwise direction simultaneously. In one embodiment, the start sensor 120 and the stop sensor 122 are IR sensors or proximity sensors.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the appended claims.

Thus, the invention describes a system, which includes a processor, a servo motor, a flexible rubber platform, the packaged magnetic materials, a piston, electromagnets, a start sensor and a stop sensor. The electromagnets pick the packaged magnetic materials from the flexible rubber platform. The flexible rubber platform includes a high surface tension area and a low surface tension area. The piston is coupled below the high surface tension area and adapted to lift the packaged magnetic material near to the magnetic field of the electromagnets. The start sensor provides a start signal to the processor when the piston lifts the packaged magnetic material from the high surface tension area to energize the electromagnets. The stop sensor provides a stop signal to the processor when the packaged magnetic material reaches the packaging machine to de-energize the electromagnets to drop the packaged magnetic material in the packaging machine.

### List of reference numbers

- 102: First electromagnetic carrier head
- 104: Second electromagnetic carrier head
- 106: Third electromagnetic carrier head
- 108: Fourth electromagnetic carrier head
- 110: Plurality of packaged magnetic metals
- 110A: first packaged magnetic metal
- 110B: second packaged magnetic metal
- 110C: third packaged magnetic metal
- 110D: fourth packaged magnetic metal
- 112: Servo motor
- 114: Cross shaped frame
- 116: Flexible rubber platform
- 118: Piston
- 120: Start sensor
- 122: Stop sensor
- 124: Material pouring box
- 126: packaging machine
- 128: Automation box
- 130: Screw packaged with PP or PE
- 202: High surface tension area
- 204: low surface tension area

## Claims

1. Automated system (100) for feeding one of a plurality of packaged magnetic materials (110) in form of magnetic parts, which are packaged together in a plastic bag, to a further packing machine (126), wherein the system comprises:
a processor;
a plurality of electromagnetic carrier heads that are configured to pick one of a plurality of packaged magnetic materials (110);
a platform (116) that is adapted to receive one of a plurality of packaged magnetic materials (110), wherein the centre area of the platform (116) is coated with a formulated paint and rest of the area of the flexible rubber platform is coated with silicon paint, wherein the formulated paint coat defines a high surface tension area (202), wherein the high surface tension area (202) is adapted to receive a single packaged magnetic material (110B) from the plurality of packaged magnetic materials (110);
a piston (118) that is coupled below the high surface tension area (202) and adapted to lift the packaged magnetic material (110B) near to the magnetic field of the plurality of electromagnetic carrier heads;
a start sensor (120) that is configured to sense the packaged magnetic material (110B) when the piston (118) lifts the packaged magnetic material from the flexible rubber platform (116) and provide a start signal to the processor, wherein the processor energizes at least one of the plurality of electromagnetic carrier heads to attract the packaged magnetic material when the processor receives start signal;
a servo motor (112) that is coupled to a cross shaped frame (114) and configured to rotate the cross shaped frame 90° horizontally in a clockwise/counter-clockwise direction, wherein each axis of the cross shaped frame is coupled with a electromagnetic carrier head of the plurality of electromagnetic carrier heads; and
a stop sensor (122) that is configured to provide a stop signal to the processor when the packaged magnetic material reaches the packaging machine (126), wherein the processor de-energizes at least one of the plurality of electromagnetic carrier heads to drop the packaged magnetic material in the packaging machine when the processor receives the stop signal.

2. The system of claim 1, wherein the plurality of packaged magnetic materials (110) are screws (130) packaged together by a plastic bag made of polypropylene or polyethylene, wherein the packaging machine (126) is a shrink packaging machine.

3. The system of claim 1, wherein the plurality of electromagnetic carrier heads comprises:
a first electromagnetic carrier head (102) that is coupled to a first axis of the cross shaped frame (114);
a second electromagnetic carrier head (104) that is coupled to a second axis of the cross shaped frame (114);
a third electromagnetic carrier head (106) that is coupled to a third axis of the cross shaped frame(114); and
a fourth electromagnetic carrier head (108) that is coupled to a fourth axis of the cross shaped frame (114).

4. The system of claim 3, wherein the processor is configured to provide signals to (i) energize the first electromagnetic carrier head (102), (ii) de-energize the third electromagnetic carrier head (106), and (iii) rotate the cross shaped frame (114) 90° horizontally in the clockwise/counter-clockwise direction simultaneously.

5. The system of claim 3, wherein the processor is configured to provide signals to (i) energize the second electromagnetic carrier head (104), (ii) de-energize the fourth electromagnetic carrier head (108), and (iii) rotate the cross shaped frame (114) 90° horizontally in the clockwise/counter-clockwise direction simultaneously.

6. The system of claim 1, wherein the silicon painted area defines a low surface tension area (204), wherein the low surface tension area (204) is adapted to hold the plurality of packaged materials (110) when the piston (118) lifts the packaged material from the high surface tension area (202).

7. The system of claim 6, wherein the flexible rubber platform is adapted to shrink up and down during the movement of the piston (118).

8. A method for feeding a plurality of packaged magnetic materials (110) to a packing machine (126), wherein the method comprises:
lifting, using a piston (118), a first packaged magnetic material (110AB) from a high surface tension area (202) of a flexible rubber platform (116), wherein the centre area of the flexible rubber platform (116) is coated with a formulated paint and rest of the area of the flexible rubber platform (116) is coated with silicon paint, wherein the formulated painted area defines the high surface tension area (202) and silicone painted area defines a low surface tension area (204);
sensing, using a start sensor (120), the first packaged magnetic material (110AB) when the first packaged magnetic material (110AB) is lifted from the flexible rubber platform (116);
providing, using the start sensor (120), a start signal to a processor to energize a first electromagnetic carrier head (102);
energizing, using the processor, the first electromagnetic carrier head (102) to pick the first packaged magnetic material (110AB);
picking, using the first electromagnetic carrier head (102), the first packaged magnetic material (110A), wherein the first electromagnetic carrier head (102) coupled to a cross shaped frame (114);
providing, using the processor, a signal to a servo motor (112) to rotate the cross shaped frame (114);
rotating, using the servo motor (112), the cross shaped frame (114) 90° horizontally in a clockwise/ counter-clockwise direction;
sensing, using a stop sensor (122), the first packaged magnetic material (110A) when the first packaged magnetic material (110A) reaches the packaging machine (126);
providing, using the stop sensor (122), a stop signal to the processor to de-energize the first electromagnetic carrier head (102); and
de-energizing, using the processor, the first electromagnetic carrier head (102) to drop the first packaged magnetic material (110A) in the packaging machine (126).

9. The method of claim 8, wherein the high surface tension area (202) is adapted to receive the first packaged magnetic material (110AB) and the low surface tension area is adapted to receive the plurality of packaged magnetic materials (110) except the first packaged magnetic material (110A).

10. The method of claim 8, wherein the cross shaped frame (114) is coupled with
(i) the first electromagnetic carrier head (102), (ii) a second electromagnetic carrier head (104), (iii) a third electromagnetic carrier head (106), and (iv) a fourth electromagnetic carrier head (108), wherein each electromagnetic carrier head is adapted to pick at least one of the plurality of packaged magnetic materials (110).

11. The method of claim 10, wherein (i) the first electromagnetic carrier head (102) is configured to pick the first packaged magnetic material (110AB), (ii) the second electromagnetic carrier head (104) is configured to pick a second packaged magnetic material (110B), (iii) the third electromagnetic carrier head (106) is configured to pick a third packaged magnetic material (110C), and (iv) the fourth electromagnetic carrier head (108) is configured to pick a fourth packaged magnetic material (110D).

12. The method of claim 11, wherein the processor is configured to provide signals to (i) energize the first electromagnetic carrier head (102) to pick the first packaged magnetic material (110A) from the flexible rubber platform (116), (ii) de-energize the third electromagnetic carrier head (106) to drop the third packaged magnetic material (110C) in the packaging machine (126), and (iii) rotate the cross shaped frame (114) 90° horizontally in the clockwise/ counter-clockwise direction simultaneously.

13. The method of claim 11, wherein the processor is configured to provide signals to (i) energize the second electromagnetic carrier head (104) to pick the second packaged magnetic material (110B) from the flexible rubber platform (116), (ii) de-energize the fourth electromagnetic carrier head (108) to drop the fourth packaged magnetic material (110D) in the packaging machine (126), and (iii) rotate the cross shaped frame (114) 90° in the clockwise/ counter-clockwise direction simultaneously.

14. The method of claim 8, wherein the plurality of packaged magnetic materials (110) is screws (130) packaged with polypropylene or polyethylene bag.

15. The method of claim 8, wherein the start sensor (120) and the stop sensor (122) are IR sensors or proximity sensors.
